(19)

**Europäisches Patentamt**
**European Patent Office**
**Office européen des brevets**

(11) **EP 1 622 837 B1**

(12) **EUROPÄISCHE PATENTSCHRIFT**

(45) Veröffentlichungstag und Bekanntmachung des Hinweises auf die Patenterteilung:
**29.12.2010  Patentblatt 2010/52**

(21) Anmeldenummer: **04729355.0**

(22) Anmeldetag: **24.04.2004**

(51) Int Cl.:
**C02F 1/44** (2006.01)     **C02F 1/46** (2006.01)
**B01D 61/36** (2006.01)

(86) Internationale Anmeldenummer:
**PCT/DE2004/000855**

(87) Internationale Veröffentlichungsnummer:
**WO 2004/101444 (25.11.2004 Gazette 2004/48)**

(54) **VERFAHREN UND VORRICHTUNG ZUR WASSERAUFBEREITUNG, INSBESONDERE WASSERENTSALZUNG, MITTELS MEMBRANDESTILLATION**

METHOD AND DEVICE FOR THE PURIFICATION, ESPECIALLY DESALINATION, OF WATER

PROCEDE ET DISPOSITIF POUR LE TRAITEMENT DE L'EAU, EN PARTICULIER POUR LE DESSALEMENT DE L'EAU, PAR DISTILLATION TRANSMEMBRANAIRE

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.05.2003   DE 10321146**

(43) Veröffentlichungstag der Anmeldung:
**08.02.2006   Patentblatt 2006/06**

(73) Patentinhaber: **Clean Water Gesellschaft für Wasseraufbereitungstechnik mbH**
**76327 Pfinztal (DE)**

(72) Erfinder:
 • **HAMBITZER, Günther**
  **53115 Bonn (DE)**
 • **BIOLLAZ, Heide**
  **79761 Waldshut (DE)**
 • **BORCK, Markus**
  **70567 Stuttgart (DE)**
 • **RIPP, Christiane**
  **76327 Pfinztal (DE)**

(74) Vertreter: **Pfeifer, Hans-Peter et al**
**Durm & Partner**
**Patentanwälte**
**Moltkestrasse 45**
**76133 Karlsruhe (DE)**

(56) Entgegenhaltungen:
**WO-A-03/028862     US-A- 3 923 426**
**US-A- 4 419 242     US-A1- 2002 166 592**

 • YING KONG, XIAO LIN, YONGLIE WU, JIE CHEN, JIPING XU: "Plasma Polymerization of Octafluorocyclobutane and Hydrophobic Microporous Composite Membranes for Membrane Distillation" JOURNAL OF APPLIED POLYMER SCIENCE, Bd. 46, Nr. 2, 15. September 1992 (1992-09-15), Seiten 191-199, XP002299178
 • KORNGOLD E ET AL: "Water desalination by pervaporation with hollow fiber membranes" DESALINATION, ELSEVIER SCIENTIFIC PUBLISHING CO, AMSTERDAM, NL, Bd. 107, Nr. 2, 1. Oktober 1996 (1996-10-01), Seiten 121-129, XP004071159 ISSN: 0011-9164

EP 1 622 837 B1

**EP 1 622 837 B1**

**Beschreibung**

Die Erfindung betrifft ein Wasseraufbereitungsverfahren und eine entsprechende Vorrichtung. Das wichtigste Anwendungsgebiet ist die Gewinnung von Frischwasser ("Süßwasser") aus Salzwasser (insbesondere Meer- oder Brackwasser). Nachfolgend wird beispielhaft auf dieses Anwendungsgebiet Bezug genommen. Die Erfindung ist jedoch auch für andere Anwendungszwecke geeignet, bei denen sich die Aufgabe stellt, aus verunreinigtem Wasser durch Destillation gereinigtes Wasser zu gewinnen. Dies schließt insbesondere auch die Reinigung von mit Bakterien oder Viren verunreinigtem Wasser (beispielsweise Abwasser oder Flußwasser) ein.

Die Meerwasserentsalzung und weitere Wasseraufbereitungsverfahren sind von größter Bedeutung für die Versorgung der Weltbevölkerung mit Trinkwasser. Von dem gesamten Oberflächenwasser auf der Erde sind nur etwa 2,5% Süßwasser. Davon sind ca. 80% in den Polkappen eingefroren oder als Bodenfeuchtigkeit gebunden, so daß nur etwa 0,5% des gesamten Oberflächenwassers als Trinkwasser verfügbar sind. Hinzu kommt, daß die Trinkwasservorräte sehr undgleichmäßig verteilt sind. Deswegen leidet ein großer Teil der Erdbevölkerung an Wasserknappheit.

Zur Überwindung dieses Problems sind bereits zahlreiche Verfahren zur Meerwasserentsalzung vorgeschlagen worden. Dabei sind schwierige Anforderungen zu erfüllen, u.a. weil das Meerwasser einen Salzgehalt von etwa 30 g/l hat, während Trinkwasser gemäß der Weltgesundheitsorganisation (WHO) einen Salzgehalt von 0,5 g/l nicht überschreiten darf. Bei konventionellen Destillationsverfahren wird das Salzwasser durch Zufuhr von Wärmeenergie verdampft und an einer Kühlfläche wieder kondensiert. Um die Kosten für den damit verbundenen hohen Energieverbrauch zu reduzieren, wird vielfach versucht, Solarenergie als Energiequelle einzusetzen. In der Publikation

Bouchekima et al.: "The performance of the capillary film solar still installed in South Algeria" aus Desalination 137 (2001) 31-38

wird eine spezielle derartige Anlage ("solar still") beschrieben, bei der durch Verwendung einer Kapillarstruktur an der Oberseite der Kondensationsfläche eine verbesserte Kondensation des verdampften Wassers erreicht werden soll.

Daneben werden schon seit langem verschiedene Membranverfahren diskutiert. Hierzu gehört die Umkehr-Osmose, bei der das Salzwasser unter Druck durch eine Membran gepreßt wird, deren Poren so bemessen sind, daß das Salz zurückbleibt. Ein anderes Verfahren ist die Elektrodialyse, bei der zwei Elektroden in eine Elektrolytlösung getaucht werden. Im elektrischen Feld einer Gleichspannung setzt in dem Salzwasser eine Ionenwanderung ein. Durch abwechselnde Hintereinanderschaltung von Kationen- und Anionentauschermembranen zwischen den Elektroden einer Elektrolysezelle kann der Ionenfluß derartig gelenkt werden, daß in den äußeren Kammern eine Konzentrationszunahme erfolgt, während in der mittleren Kammer eine Abnahme der Konzentration des Elektrolyten, also eine Entsalzung, festzustellen ist.

Zu den Membranverfahren gehört auch die Membrandestillation, bei der das aufzubereitende Wasser, das nachfolgend einfachheitshalber auch als Salzwasser bezeichnet wird, in einer Zuführungskammer gehalten wird, deren Wand mindestens teilweise von einer hydrophoben porösen Membran gebildet wird. Dabei muß die Porengröße der Membran unter Berücksichtigung von deren hydrophoben Eigenschaften (d.h. ihrer Grenzflächenspannung gegenüber Wasser) so bemessen sein, daß das Salzwasser die Poren der Membran nicht füllt, die Poren der hydrophoben Membran also Luft enthalten. Mit anderen Worten muß der als Blasendruck (bubble-pressure) bezeichnete maximale hydrostatische Druck, bei dem noch kein Durchtritt des Wassers durch die hydrophobe Membran stattfindet, geringer als der im Betrieb des Verfahrens in der Zuführungskammer auftretende Druck sein.

Bei der Membrandestillation wird das Salzwasser durch die hydrophobe Membran hindurch verdampft. Auf der Destillatseite (Frischwasserseite) wird der Dampf kondensiert. Der Destillationsprozeß basiert (wie bei den konventionellen Destillationsverfahren) auf dem Temperaturunterschied zwischen dem Meerwasser, das erhitzt wird und dem kondensierenden Frischwasser, das gekühlt wird. Unterschiedliche Membrandestillationsverfahren werden beispielsweise beschrieben in:

- US-Patent 3,340,186 (P.K. Weyl)

- US-Patent 4,545,862 (Gore et al.)

- US-Patente 4,265,713, 4,476,024, 4,419,187 und 4,473,473 (alle Cheng et al.).

- YING KONG et al.: "Plasma Polymerization of Octafluorocyclobutane and Hydrophobic Microporous Composite Membranes for Membrane Distillation" JOURNAL OF APPLIED POLYMER SCIENCE, Seiten 191-199

Der Erfindung liegt auf dieser Grundlage das technische Problem zugrunde, ein Verfahren zur Wasseraufbereitung, insbesondere zur Wasserentsalzung, und eine entsprechende Vorrichtung anzugeben, die sich durch verminderte Betriebs- und Investitionskosten auszeichnen.

Dieses technische Problem wird gelöst durch ein Wasseraufbereitungsverfahren, bei dem das Salzwasser in einer Zuführungskammer gehalten wird, deren Wand mindestens teilweise von einer hydrophoben wasserdampfdurchlässigen Membran gebildet wird, deren Porengröße so bemessen ist, daß das Salzwasser die Poren nicht füllt, parallel zu der hydrophoben Membran eine hydrophile Membran verläuft, die eine im Vergleich zu der hydrophoben Membran größere Dicke und geringere Wärmeleitung je Flächeneinheit hat, und durch Pumpwirkung ein Dampfdruckunterschied zwischen dem Salzwasser und dem Frischwasser erzeugt wird, so daß die Membrandestillation durch den aus der Pumpwirkung resultierenden Dampfdruckunterschied angetrieben wird, wobei das Wasser in den Poren der hydrophilen Membran kondensiert.

Gegenstand der Erfindung ist auch eine Vorrichtung zur Aufbereitung von Wasser, insbesondere für die Gewinnung von Frischwasser aus Salzwasser, mittels Membrandestillation, umfassend eine Zuführungskammer, deren Wand mindestens teilweise von einer hydrophoben wasserdampfdurchlässigen Membran gebildet wird, deren Porengröße so bemessen ist, daß das Salzwasser die Poren nicht füllt, einer parallel zu der hydrophoben Membran verlaufenden hydrophilen Membran, die eine im Vergleich zu der hydrophoben Membran größere Dicke und geringere Wärmeleitung je Flächeneinheit hat, so daß das Wasser in den Poren der hydrophilen Membran in der Nähe der Grenzfläche zu der hydrophoben Membran kondensiert, und einer Pumpeinrichtung, durch die ein Dampfdruckunterschied zwischen dem Salzwasser und dem Frischwasser erzeugt wird, so daß die Membrandestillation durch den aus der Pumpwirkung resultierenden Dampfdruckunterschied angetrieben wird, wobei das Wasser in den Poren der hydrophilen Membran kondensiert.

Die Begriffe "hydrophil" und "hydrophob" sind im allgemein gebräuchlichen Sinne zu verstehen: "Hydrophil" ist eine Oberfläche, wenn die relative Attraktion zwischen den Wassermolekülen geringer als die Attraktion zwischen den Wassermolekülen und der festen Oberfläche ist. Bei einer "hydrophoben" Oberfläche gilt die gegenteilige Aussage. Der Kontaktwinkel zwischen der Flüssigkeit und einer hydrophilen (benetzbaren) Oberfläche beträgt (bei Abwesenheit anderer Kräfte) weniger als 90°, während er bei einer hydrophoben Oberfläche mehr als 90° beträgt.

Die hydrophobe Membran soll möglichst dünn sein. Vorzugsweise liegt ihre Dicke unter 100 $\mu$m, wobei Werte von höchstens 10 $\mu$m oder sogar höchstens 1 $\mu$m besonders bevorzugt sind. Die Wasserdampfdurchlässigkeit resultiert in der Regel daraus, daß die hydrophobe Membran porös mit einer Porengröße von mindestens einigen Nanometern ist. Im Falle einer extrem dünnen hydrophoben Membran kann die Wasserdampfdurchlässigkeit jedoch auch auf einer Permeabilität der Membran basieren, die nicht als Porosität in diesem Sinne angesehen werden kann. Die Obergrenze der Porengröße resultiert aus der weiter oben erwähnten Bedingung hinsichtlich des Blasendruckes. Unter Berücksichtigung dieser Limitierung sollte sie möglichst groß sein. Als Material für die hydrophobe Membran sind insbesondere folgende Kunststoffe geeignet: Polytetrafluorethylen, Polyvinylchlorid.

Die hydrophile Membran muß nicht homogen sein. Insbesondere kann sie auch mehrschichtig ausgebildet sein. Geeignet sind unterschiedliche poröse Schichtmaterialien, insbesondere Kunststoffe. Sofern das unbehandelte Schichtmaterial hydrophob ist, kann die erforderliche Hydrophilität durch eine geeignete Behandlung der inneren Oberfläche (d.h. der Oberfläche, die im Inneren des Materials die Poren begrenzt), erreicht werden. Derartige Verfahren sind bekannt, beispielsweise wird hydrophobes Polycarbonat durch dünne Oberflächenbeschichtung mit Polyvinylpyrrolidon hydrophilisiert.

Als Material für die hydrophile Membran sind insbesondere folgende Kunststoffe geeignet: Cellulose, Celluloseacetat, Cellulosenitrat, Polysulfon und Polyethersulfon.

Dadurch, daß die hydrophile Membran dicker als die hydrophobe Membran ist (Dickenrelation vorzugsweise mindestens 10, besonders bevorzugt mindestens 100) und ihre Wärmeleitung je Flächeneinheit wesentlich geringer als die der hydrophoben Membran ist, unterscheiden sich die Temperaturen, die sich im Betrieb des Verfahrens auf beiden Seiten der hydrophoben Membran einstellen, nur geringfügig, wobei die Temperatur auf der Frischwasserseite geringfügig höher als auf der Salzwasserseite ist. Entsprechend ist die resultierende Dampfdruckerhöhung auf der Frischwasserseite nur gering. Durch eine Pumpwirkung entweder auf der Salzwasser- oder auf der Frischwasserseite wird diese geringe Dampfdruckerhöhung überkompensiert, und es erfolgt ein Massetransport durch die hydrophobe Membran in Richtung der hydrophilen Membran, wobei das Wasser in den Poren der hydrophilen Membran kondensiert. Im Gegensatz zu den bekannten Membrandestillationsverfahren, bei denen der Massetransport dadurch erzielt wird, daß das Frischwasser mittels Kühlung eine tiefere Temperatur besitzt als das Salzwasser und dadurch einen niedrigeren Dampfdruck hat, resultiert bei dem erfindungsgemäßen Verfahren der Dampfdruckunterschied aus der Pumpwirkung.

Die erläuterten konstruktiven Maßnahmen und Verfahrensbedingungen führen dazu, daß sich die Poren der hydrophilen Membran zu Beginn der Destillation mit Frischwasser füllen und danach die weitere Kondensation in unmittelbarer Nachbarschaft derjenigen Begrenzungsfläche der hydrophilen Membran stattfindet, die der hydrophoben Membran zugewandt ist. In Anbetracht der erläuterten thermischen Verhältnisse führt dies dazu, daß die Destillation vorzugsweise nahezu isotherm erfolgt, wobei die Differenz zwischen der Temperatur des kondensierenden Frischwassers und der Temperatur des verdampfenden Salzwassers weniger als 30°C, bevorzugt weniger als 10°C, besonders bevorzugt weniger als 1°C, beträgt ("quasiisotherme Membrandestillation").

Die erläuterten thermischen Verhältnisse haben weiterhin zu Folge, daß die bei der Kondensation auf der Frischwasserseite frei werdende Kondensationswärme nahezu vollständig (jedenfalls zu mehr als 60%) unmittelbar durch die hydrophobe Membran zu dem verdampfenden Meerwasser strömt, weil der diesem Wärmestrom entgegenstehende Wärmewiderstand sehr viel geringer ist als der Wärmewiderstand, der von der thermisch isolierenden hydrophilen Membran gebildet wird. Infolgedessen resultiert ein großer Teil der für das Verdampfen des Meerwassers erforderlichen Verdampfungswärme aus der unmittelbaren Rückführung der Kondensationswärme durch die hydrophobe Membran. Dadurch wird der Energieverbrauch des Verfahrens wesentlich vermindert.

Hinsichtlich dieser Gesichtspunkte unterscheidet sich die Erfindung grundlegend von einigen der oben erwähnten US-Patente von Cheng, beispielsweise dem US-Patent 4,419,242. Dort wird die Verwendung einer dünnen hydrophilen Schicht, die auf der Meerwasserseite und/oder auf der Frischwasserseite der hydrophoben Membran verlaufen und porös oder nichtporös sein kann, in einem anderen Zusammenhang empfohlen. Cheng beschreibt, daß bei einer herkömmlichen Membrandestillation durch eine hydrophobe Membran die Salzkonzentration im Laufe der Zeit zunimmt und sich dadurch die Benetzungseigenschaften der Membran ändern. Dies kann dazu führen, daß Salzwasser die Poren der hydrophoben Membran füllt und dadurch die erforderliche Dampfbarriere zerstört ("water-logging"). Dies soll durch die Verwendung der erwähnten hydrophilen Membran vermieden werden. Im übrigen beschreibt Cheng jedoch eine konventionelle Membrandestillation, die durch einen ausreichend großen Temperaturunterschied zwischen dem verdampfenden Salzwasser und dem kondensierenden Frischwasser angetrieben wird.

Im Rahmen der Erfindung kann der erforderliche Dampfdruckunterschied durch unterschiedliche Pumpverfahren erreicht werden. Grundsätzlich besteht die Möglichkeit, daß Salzwasser mittels einer konventionellen Pumpe unter einen ausreichend hohen Druck zu setzen. Dies erfordert jedoch, daß die Zuführungskammer und die Membranen ausreichend druckfest sind.

Besonders bevorzugt kommt statt dessen oder zusätzlich im Rahmen der Erfindung ein Mikropumpverfahren zum Einsatz, bei dem die Pumpwirkung auf einer Krafteinwirkung auf die in den Poren der hydrophilen Membran befindlichen Wassermoleküle basiert ("intraporöser Pumpmechanismus"). Hierzu ist insbesondere ein elektroosmotisches Pumpverfahren geeignet, das nachfolgend noch näher erläutert wird.

Die Erfindung wird nachfolgend anhand von in den Figuren dargestellten Ausführungsbeispielen näher erläutert. Die darin dargestellten Besonderheiten können einzeln oder in unterschiedlichen Kombinationen verwendet werden, um bevorzugte Ausgestaltung der Erfindung zu schaffen. Es zeigen:

Fig. 1 eine schematische Schnittansicht der wesent- lichen Teile einer ersten Ausführungsform von einer zur Realisierung der Erfindung geeigneten Vorrichtung.

Fig. 2 eine schematische Schnittansicht der wesent- lichen Teile einer zweiten Ausführungsform von einer zur Realisierung der Erfindung geeigneten Vorrichtung.

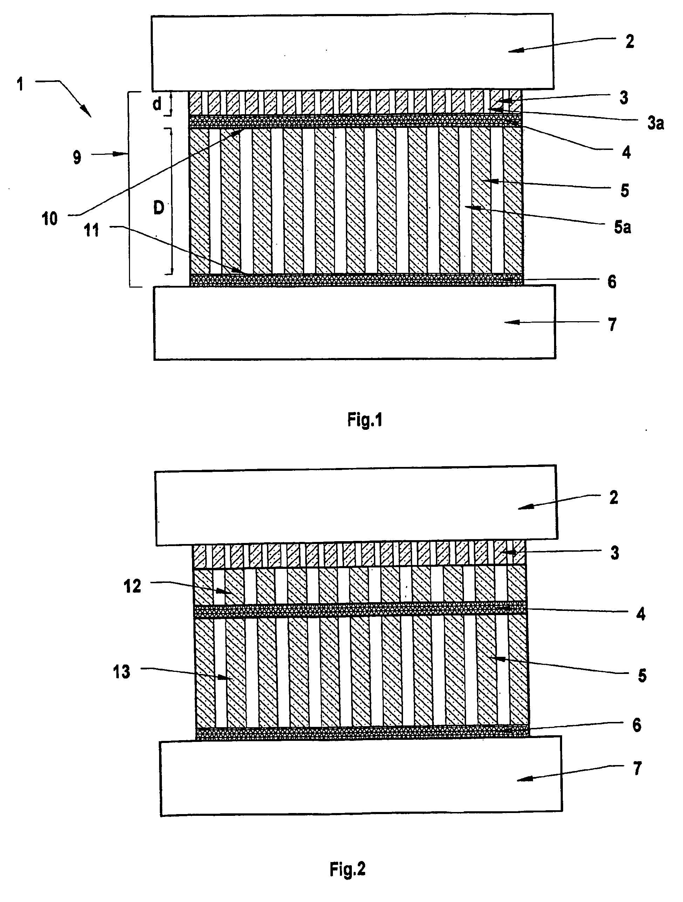

Die in Figur 1 dargestellte Wasserentsalzungsvorrichtung 1 besteht aus einer Zuführungskammer 2, einer hydrophoben Membran 3, einer ersten Elektrode 4, einer hydrophilen Membran 5, einer zweiten Elektrode 6 und einer Frischwasserkammer 7. Die Darstellung ist stark schematisiert. Insbesondere ist die Dicke der Membranen 3,5 und der Elektroden 4,6 stark übertrieben dargestellt. In der Realität bilden diese Bauelemente eine Aufeinanderfolge von parallel verlaufenden in Relation zu ihren (gleichen) Außenabmessungen relativ dünnen Schichten, die so befestigt sind, daß sie in unmittelbarem Kontakt zueinander stehen.

Zur Befestigung dieser Schichten innerhalb des dargestellten insgesamt mit 9 bezeichneten Schichtstapels können verschiedene Verfahren verwendet werden, die den erforderlichen Kontakt gewährleisten und den ebenfalls erforderlichen Dampf- bzw. Flüssigkeitsdurchtritt nicht behindern. Insbesondere kann der gesamte Schichtstapel 9 durch geeignete mechanische Mittel zusammengehalten werden. Alternativ kommen hinreichend offenporige Schichtverbundtechniken in Betracht. Insbesondere können die Elektroden 4 und 6 sowie die hydrophobe Membran auf die als Träger wirkende relativ dicke hydrophile Membran durch Laminieren oder ein anderes Beschichtungsverfahren (z.B. Ablagerung aus der Gasphase) aufgebracht sein.

Der Schichtstapel 9 ist mit der Zuführungskammer 2 derartig verbunden, daß er eine in der Figur nicht dargestellte Öffnung dieser Kammer vollständig schließt. Er bildet also einen Teil der Wände, die die Zuführungskammer begrenzen. Selbstverständlich sind beliebige in der Technik bekannte Ausführungsformen wie z.B. prismatisch, gewikkelt, tubular etc. möglich.

Wie erläutert (und bei Membrandestillationsverfahren üblich), besteht die hydrophobe Membran 3 aus einem von Wasser nicht benetzten Material, so daß zwar Wasserdampf, nicht jedoch flüssiges Wasser durch ihre in der Figur symbolisch dargestellte Poren 3a hindurchdringen kann. Der Wasserdampf durchdringt die ebenfalls poröse erste Elektrode 4, so daß er in die (wiederum symbolisch dargestellten) Poren 5a der hydrophilen Membran 5 gelangt. Die Kondensation zu flüssigem Wasser findet gemäß der Erfindung in den Poren 5a der hydrophilen Membran 5 statt. Dies schließt Fälle ein, bei denen die erste Elektrode 4 Bestandteil der hydrophilen Membran 5 und so ausgelegt ist, daß die Kondensation in den Poren der Elektrode 4 an der Phasengrenze zur hydrophoben Membran stattfindet. Von der hydrophilen Membran gelangt das Wasser durch Pumpwirkung durch die (ebenfalls poröse) zweite Elektrode 6 in die Frischwasserkammer 7, von der es in einen nicht dargestellten Sammelbehälter, vorzugsweise kontinuierlich geleitet bzw. mittels Unterdruck gepumpt wird.

Eine erste wichtige Voraussetzung der erfindungsgemäßen Funktion besteht darin, daß die Wärmeleitung je Flächeneinheit der hydrophilen Membran 5 kleiner (bevorzugt sehr viel kleiner) als die Wärmeleitung je Flächeneinheit der hydrophoben Membran 3 ist. Die Wärmeleitung eines flächigen Gebildes wie der hier verwendeten Membranen ist proportional zu der Wärmeleitfähigkeit des verwendeten Materials und umgekehrt proportional zu dessen Dicke. Um die erläuterte Bedingung zu realisieren, sollte die Wärmeleitfähigkeit der hydrophoben Membran 3 möglichst hoch und die Wärmeleitfähigkeit der hydrophilen Membran 5 möglichst niedrig sein. Die Auswahl dieser Materialien unterliegt jedoch zahlreichen weiteren Restriktionen, beispielsweise hinsichtlich der Benetzungseigenschaften, der Porengröße, der Porosität und der mechanischen Festigkeit. Es ist deshalb durchaus möglich, daß in einem konkreten Fall die Wärmeleitfähigkeit der hydrophoben Membran 3 nur unwesentlich höher oder sogar niedriger als der entsprechende Wert der hydrophilen Membran 5 ist.

Von großem Einfluß ist in der praktischen Realisierung der Erfindung die Dicke der verwendeten Materialien. Vorzugsweise sollte die Schichtdicke d der hydrophoben Membran 3 sehr klein sein. Zahlenwerte wurde weiter oben genannt. Die hydrophile Membran 5 ist bevorzugt mindestens 10 mal so dick, besonders bevorzugt mindestens 100 mal so dick wie die hydrophobe Membran 3, wobei der absolute Wert der Dicke der hydrophilen Membran 5 bevorzugt mindestens 0,1 mm, besonders bevorzugt mindestens 1 mm beträgt. Insgesamt sollte die Wärmeleitung je Flächeneinheit durch die hydrophobe Membran 3 mindestens 3 mal so hoch wie die Wärmeleitung je Flächeneinheit durch die hydrophile Membran 5 sein.

Für den praktischen Erfolg der Erfindung ist weiterhin bedeutsam, daß die hydrophobe Membran 3 eine ausreichend hohe Dampfdurchlässigkeit hat. Sie sollte bevorzugt mindestens 100 l/(h*m$^2$) bei einer Druckdifferenz von 60 bar betragen. Die Porengröße der hydrophoben Membran 3 sollte bevorzugt höchstens 100 $\mu$m, besonders bevorzugt höchstens 5 $\mu$m betragen.

Wie erläutert, besteht ein weiteres für die Funktion der Erfindung wichtiges Merkmal darin, daß der für die Membrandestillation erforderliche Dampfdruckunterschied zwischen dem Salzwasser und dem Frischwasser durch Pumpwirkung aufrechterhalten wird. Bei der in den Figuren dargestellten Ausführungsform geschieht dies mittels eines Mikropumpverfahrens, das als elektroosmotisches Pumpverfahren realisiert ist. Zu diesem Zweck wird eine hydrophile Membran verwendet, deren innere Oberfläche eine positive oder negative Oberflächenladung aufweist. Diese Bedingung läßt sich durch eine geeignete Materialauswahl erfüllen. Insbesondere kommt eine Membran in Betracht, deren innere Oberfläche mittels eines Ionenaustauscher-Materials beschichtet ist. Durch die beiden parallel zu den Begrenzungsflächen 10, 11 der hydrophilen Membran 5 verlaufenden Elektroden 4, 6, an die im Betrieb eine geeignete Spannung angelegt wird, wird ein elektrisches Feld innerhalb der Membran 5 erzeugt. Geeignet ist generell eine Gleichspannung. Es gibt jedoch auch Verfahren, bei denen eine pulsierende Spannung oder eine modifizierte Wechselspannung verwendet wird. Das elektroosmotische Pumpverfahren basiert darauf, daß sich innerhalb der Poren infolge der an deren Wänden vorhandenen elektrischen Ladungsträger eine diffuse Doppelschicht bildet und die Ionen innerhalb der Flüssigkeit in dem elektrischen Feld entsprechend dessen Polarisierung und ihrer Ladungspolarität beschleunigt werden. Nähere Informationen zu elektroosmotischen Pumpverfahren können aus den weiter unten bei der Beschreibung eines Beispiels zitierten Publikationen entnommen werden. Im Rahmen der Erfindung kann die erste Elektrode 4 sowohl positiv als auch negativ (und die zweite Elektrode 6 entsprechend negativ oder positiv) geladen sein. Welche dieser Polaritäten im Einzelfall gewählt wird, hängt von der Polarität der Ladung an der inneren Oberfläche der hydrophilen Membran ab. Die Elektrodenpolarität muß jedenfalls so gewählt werden, daß die Ionen in Richtung von der hydrophoben Membran weg beschleunigt werden, so daß das Wasser aus den Poren 5a der hydrophilen Membran in die Frischwasserkammer 7 gepumpt wird.

Im Betrieb sind die Poren 5a der hydrophilen Membran 5 nahezu vollständig gefüllt, so daß die Kondensation innerhalb der Poren 5a in unmittelbarer Nähe der Grenzfläche 10 der hydrophilen Membran 5 erfolgt, die der hydrophoben Membran 3 zugewandt ist. Dies ergibt sich aus einem selbstregelnden Effekt, der auf der Grundlage des Effekts der Kapillarkondensation wie folgt erklärt werden kann. Zu Beginn des Destillationsverfahrens kondensiert der durch die hydrophobe Membran 3 hindurchtretende Wasserdampf in den Poren 5a aufgrund von deren hydrophilen Kapillareigenschaften. Dabei füllen sich die Poren 5a nach und nach, bis der Meniskus des kondensierenden Frischwassers nahe der Grenzfläche 10 verläuft. In diesem Zustand ist die Effektivität der Destillation von dem Grad der konkaven Krümmung der Kondensationsoberfläche (d.h. des Meniskus des Wassers in den Poren 5a) abhängig, die ihrerseits von dem aus der Pumpwirkung resultierenden Unterdruck abhängt. Folglich nimmt mit zunehmendem Unterdruck durch die Pumpwirkung die konkave Krümmung des Meniskus zu, wodurch die Effektivität der Kapillarkondensation erhöht wird. Dadurch wird mehr Wasserdampf nachgeführt und die Krümmung des Meniskus wird tendenziell geringer.

Dieses selbstregelnde Verhalten ist für die Funktion der Erfindung wichtig, weil dadurch der Ort der Kondensation (der erwähnte Meniskus) sehr nahe bei der hydrophoben Membran 3 und (infolge deren geringer Dicke) auch sehr nah bei dem Ort der Verdampfung liegt. Dadurch wird die weiter oben erläuterte quasiisotherme Verfahrensführung erreicht, die wiederum zu einem sehr geringen Energieverbrauch führt.

Figur 2 zeigt eine Ausführungsform, bei der die erste Elektrode 4 innerhalb der hydrophilen Membran 5 verläuft, welche aus zwei Schichten 12 und 13 besteht. Grundsätzlich können die Elektroden 4 und 6 innerhalb der Vorrichtung 1 unterschiedlich lokalisiert werden, sofern die Bedingung erfüllt ist, daß das zwischen ihnen (bei Anlegen einer Spannung) bestehende elektrische Feld auf die Flüssigkeit in den Poren 5a der hydrophilen Membran einwirkt. Beispielsweise kann die zweite Elektrode 6 auch auf der von der hydrophilen Membran 5 abgewandten Seite der Frischwasserkammer 7 positioniert sein. Die Position der Elektroden 4,6 hat unter anderem Einfluß auf das erläuterte Selbstregelungsverhalten hinsichtlich des Meniskus des in den Poren 5a kondensierenden Frischwassers. Die in Figur 2 dargestellte Anordnung kann diesbezüglich vorteilhaft sein.

Im Regelfall ist mindestens eine der Elektroden 4, 6 mit der hydrophilen Membran 5 fest verbunden bzw. in diese integriert. Derartige Elektroden sind als Bestandteile der hydrophilen Membran 5 anzusehen. Dies bedeutet insbesondere, daß im Falle einer an der Grenzfläche 10 in die hydrophile Membran 5 integrierten Elektrode die Kondensation in dem von der Elektrode 4 gebildeten Teil der Membran 5 stattfinden kann.

Wie erwähnt, kann die hydrophile Membran 5 aus unterschiedlichen Materialien bestehen, die im Regelfall näherungsweise kugelförmige Poren haben. Es sind jedoch auch Membranmaterialien verfügbar, deren Poren im wesentlichen gerade zwischen den Grenzflächen 10 und 11 verlaufen, ähnlich wie dies in den Figuren 1 und 2 dargestellt ist. Derartige Materialien können vorteilhaft für die hydrophile Membran der Erfindung verwendet werden.

Bei der in den Figuren dargestellten Ausführungsform mit einem elektroosmotischen Pumpverfahren sind elektrochemische Effekte zu berücksichtigen. Insbesondere kann es bei Spannungen von mehr als etwa 1,8 V zur Entwicklung von Wasserstoff an der Kathode kommen. Dies kann genutzt werden, um zusätzlich zu dem gereinigten Wasser Wasserstoff zu gewinnen. Dabei ist zweckmäßigerweise die der hydrophoben Membran zugewandte Elektrode die Anode. Andererseits besteht aber auch die Möglichkeit, unerwünschte elektrochemische Effekte dadurch zu reduzieren oder zu beseitigen, daß entsprechende Ionenaustauschermembranen eingesetzt werden, die den Durchtritt von Ionen oder Gasen (z.B. Sauerstoff), welche zu unerwünschten elektrochemischen Reaktionen führen, behindern.

Das nachfolgende Beispiel dient zur weiteren Erläuterung der Erfindung:

Zur Beschreibung des Verfahrens müssen verschiedene Vorgänge betrachtet werden. Den Beispielrechnungen liegt ein Massenfluß M von 30 l/h*m$^2$ und eine Meerwassertemperatur von 17°C zugrunde.

1. Wärmebilanz um den Punkt der Kondensation

Es findet eine Verdampfung des Wassers durch die hydrophobe Membran und die anschließende Kondensation an der Oberfläche der wassergefüllten Pore der hydrophilen Membran statt. Der damit verbundene Wärmetransport läßt sich mathematisch folgendermaßen beschreiben. Der Wärmeverlust wird im Beispiel mit einem Promille angenommen. Die Temperaturerhöhung ist mit 0,14 K angenommen.

$$Wärmeverluste: \frac{QW2 + QM2}{QM1} = \frac{1}{1000}$$

$$Temperaturerhöhung: T2 = T1 + 0{,}14K$$

$$Wärmebilanz: Qkon = QW2 + QM2 + QM1 = M * Hv$$

mit:

$$Q_{kon} = M * Hv$$

$$QM1 = \frac{\lambda_{M1}}{L_1}(A_1 - A_{e1})(T2 - T1)$$

$$QM2 = \frac{\lambda_{M2}}{L_2}(A_2 - A_{e2})(T2 - T3)$$

$$QW2 = \frac{\lambda_W}{L_{e2}}A_{e2}(T2 - T3) + Mcp(T2 - T3)$$

Qkon = Kondensationswärme
QM1 = Wärmeleitung durch die hydrophobe Membran
QM2 = Wärmeleitung durch die hydrophile Membran
QW1 = Wärmeleitung und -transport durch das Wasser
λ = Wärmeleitfähigkeitskoeffizient
A = Querschnittsfläche
L = Dicke der Membran
M = Massenfluß
cp = Wärmekapazität
Hv = Verdampfungswärme
T1 = Temperatur am Ort der Verdampfung
T2 = Temperatur am Ort der Kondensation
T3 = Temperatur im Trinkwasserbulk

Tabelle 1 zeigt die Ergebnisse von Berechnungen für einen vorgegebenen Massenfluß von 30 l/h*m$^2$. Die Temperaturerhöhung im Meerwasser liegt bei 1°K. Dies zeigt, dass die gewünschte quasi-isotherme Verfahrensführung erreicht wird.

Tabelle 1:

| Meerwasser Ein | | | Meerwasser Aus | | | Trinkwasser Aus | | |
|---|---|---|---|---|---|---|---|---|
| T | M | Konz. | T | M | Konz. | T | M | Konz. |
| [°C] | [kg/s] | [g/kg] | [°C] | [kg/s] | [g/kg] | [°C] | [kg/s] | [g/kg] |
| 17 | 9,2*10^-3 | 36 | 18 | 8,3*10^-4 | 50 | 17 | 8,3*10^-3 | - |

2. Kapillarkondensation

In den Poren der hydrophilen Membran kondensiert der Wasserdampf. Es bildet sich in der Kapillare eine gekrümmte Oberfläche aus. Über dieser Fläche herrscht der Dampfdruck pv. Dieser Dampfdruck pv ist erniedrigt gegenüber dem Dampfdruck pv0 an einer ebenen Fläche und ist damit die treibende Kraft für die Kondensation des Wasserdampfes in der Kapillare. Mit Hilfe der Kelvin-Gleichung 2.a und den Gleichungen 2.b und 2.c läßt sich der erniedrigte Dampfdruck pv berechnen. Der Kapillardruck pk, der aufgewendet werden muß um Wasser aus der Kapillare zu saugen, berechnet sich aus der Gleichung 2.b und muss mindestens so groß sein wie der Unterdruck, der zur Erniedrigung des Dampfdrucks benötigt wird und sich aus der Kelvin-Gleichung 2.a berechnen lässt.

Gleichung 2.a:

$$p_K = \frac{RT}{V_L} ln \frac{p_V^0}{p_V} \qquad \left(Kelvin - Gleichung\right)$$

Gleichung 2.b:

$$p_K = \frac{2\gamma_L \cos\delta}{r}$$

Gleichung 2.c:

$$\gamma_{H_2O} = 0{,}1179 \frac{N}{m} \left( 1 - \frac{T}{T_{krit.}} \right)^{\frac{4}{3}}$$

mit:

pk = Kapillardruck
VL = Molvolumen der Flüssigkeit (Wasser: 18,05 cm$^3$/mol)
pv0 = Dampfdruck bei pk = 0
pv = Dampfdruck
R = allgemeine Gaskonstante 8,31441 J/molK
T = Temperatur
Tkrit. = kritische Temperatur (Wasser: 647,3 K)
yL = Oberflächenspannung
δ = Benetzungswinkel
r = Radius der Kapillare

Tabelle 2 zeigt die ermittelten Werte für die Beispielrechnung. Der Dampfdruck Pv ist gegenüber dem Dampfdruck Pv0 von 2300 Pa um 170 Pa erniedrigt. Bei einem Porenradius von 12 nm wird ein Kapillardruck von 120000 Pa erreicht. Dieser Kapillardruck muss mindestens von der elektroosmotischen Mikropumpe aufgebracht werden.

Tabelle 2:

| Kapillarkondensation | | |
|---|---|---|
| Pv [Pa] | P$_k$ [Pa] | r [m] |
| 2130 | 120*10^5 | 12*10^-9 |

3. Hydrophobe Membran

Bei einem vorgegebenen Massenfluß und dem aus der Dampfdruckerniedrigung durch die Kapillarkondensation resultierenden Dampfdruckunterschied Dp können die Eigenschaften der hydrophoben Membran bestimmt werden (Gleichung 3.a).

Gleichung 3.a:

$$M = \frac{DMw}{RT} \frac{A\,\Psi}{L\tau} \Delta P$$

mit:

M = Massenfluß
ΔP = Druckdifferenz
R = allgemeine Gaskonstante 8,31441 J/molK
T = Temperatur
D = Diffusionskoeffizient
Mw = Molekulargewicht
Ψ = Porosität (Ψ = Ue/U Ue: Leervolumen; U: Gesamtvolumen des porösen Mediums)
A = Querschnittsfläche (Ae = ΨA/√τ Ae: effektive Querschnittsfläche)
τ = Tortuositätsfaktor
L = Dicke des porösen Mediums ($\tau = (Le/L)^2$ Le: effektive Länge der Poren

In Tabelle 3 ist die Dicke der Membran bei entsprechender Druckdifferenz und vorgegebener Porosität und Tortuosität berechnet. Es ergibt sich ein Wert von 1 μm Dicke.

Tabelle 3:

| Hydrophobe Membran | | | |
|---|---|---|---|
| M | A | L | P |
| [kg/s] | [m2] | [m] | [Pa] |
| 8,3*10^-3 | 1 | 10^-6 | 170 |

4. Elektroosmotische Pumpe

Um die treibende Kraft für die Kondensation, also die Dampfdruckdifferenz, beizubehalten, muß das kondensierte Wasser aus den Kapillaren abtransportiert werden. Dazu wird die Methode der elektroosmotischen Mikropumpe eingesetzt. Eine mathematische Beschreibung der Prozesse findet sich bei C.L. Rice und R. Whitehead (Electrokinetic Flow in a Narrow Cylindrical Capillary; J. Phys. Chem. 69 (1965) 4017-4024) und bei S. Zeng, C.-H. Chen, J. C. Mikkelsen Jr.und J.G. Santiago (Fabrication and charaterization of electroosmotic micropumps; Sensors and Actuators B 79 (2001) 107-114). Aus den Gleichungen ergeben sich der maximale Volumenfluß (Massenfluß/Dichte) 4.a, der maximal erreichbare Pumpdruck 4.b und die maximale Spannung 4.c.

Gleichung 4.a:

$$Max.\,Volumenflu\beta\,(P=0):V_{max} = \frac{\lambda^2 i_{EOF}}{\varepsilon\varsigma} \frac{BF1}{BF2}$$

Gleichung 4.b:

$$Max.\,Druck\,(V=0):\Delta P_{max} = -\frac{8\mu L\tau\lambda^2 i_{EOF}}{\varepsilon\varsigma A\Psi r^2} \frac{BF1}{BF2}$$

Gleichung 4.c:

$$Max.\ Spannung\ (V = 0) : U_{max} = \frac{\mu L \tau \lambda^2 i_{EOF}}{\varepsilon^2 \varsigma^2 A \Psi} \frac{1}{BF1}$$

Der Volumenfluß V hängt über Gleichung 1.4.d mit der Druckdifferenz zusammen.

Gleichung 4.d:

$$V = V_{max}\left(1 - \frac{\Delta P}{\Delta P_{max}}\right)$$

Die minimale Leistung in Abhängigkeit von Druck und Volumenfluss ohne Berücksichtigung irreversibler Verluste (Oberflächenleitfähigkeit, bulk-Leitfähigkeit) berechnet sich nach Gleichung 4.e.

Gleichung 4.e:

$$Power = U_{max} i_{EOF}\left(1 - \frac{\Delta P}{\Delta P_{max}}\right) = \frac{\mu L \tau}{\lambda^2 A \Psi} \frac{BF2}{BF1^2} Q^2 + QP$$

Folgende Abkürzungen wurden in den obigen Gleichungen verwendet:

$$BF1 = \left(1 - \frac{2\lambda I_1(r)}{r I_0\left(r/\lambda\right)}\right)$$

$$BF2 = \left(1 - \frac{2\lambda I_1\left(r/\lambda\right)}{r I_0\left(r/\lambda\right)} - \frac{I_1^2\left(r/\lambda\right)}{I_0^2\left(r/\lambda\right)}\right)$$

mit In(x) = Modifizierte Besselsche Funktion erster Gattung n-ter Ordnung:

$$I_n(x) = i^{-n} J_n(ix) = \sum_{\nu=0}^{\infty} \frac{1}{\nu!\, \Gamma(n+\nu+1)} \left(\frac{x}{2}\right)^{2\nu+n}$$

Es bedeuten:

V = Volumenfluß
$\Delta P$ = Druckdifferenz (Ausgang - Eingang)

$\Psi$ = Porosität ($\Psi$= Ue/U Ue: Leervolumen; U: Gesamtvolumen des porösen Mediums)

A = Querschnittsfläche (Ae = $\Psi$A/$\sqrt{\tau}$ Ae: effektive Querschnittsfläche)

r = effektiver Porenradius des porösen Mediums

$\mu$ = dynamische Viskosität

$\tau$ = Tortuositätsfaktor

L = Dicke des porösen Mediums ($\tau = (Le/L)^2$ Le: effektive Länge der Poren)

$\varepsilon$ = Permittivität ($\varepsilon = \varepsilon0 * \varepsilon R$ $\varepsilon0$: elektrische Feldkonstante $\varepsilon R$: Dielektrizitätszahl)

$\zeta$ = Zetapotential

U = Spannung

U = Dicke der Diffusen Doppelschicht (Debey-Länge)

I1 = modifizierte Besselsche Funktion erster Gattung erster Ordnung

I0 = modifizierte Besselsche Funktion erster Gattung nullter Ordnung

$\kappa$ = Leitfähigkeit

iEOF = Strom durch EOF

Aus den Gleichungen ergeben sich die Eigenschaften der hydrophilen Membran. Diese Eigenschaften muß die Membran besitzen, damit ein elektroosmotischer Fluß mit geeigneter Pumpkraft erzeugt werden kann. Auf diesem Weg werden Werte für den Porenradius, die Dicke und die Oberflächenladung erhalten.

Tabelle 4 zeigt für das berechnete Beispiel die erwähnten Membraneigenschaften. Außerdem zeigt sie zusammenfassend die mit dem erfindungsgemäßen Verfahren erhältlichen positiven Resultate. Desweiteren werden Werte für die maximale Spannung (7 Volt) und den resultierenden Strom (13A) angegeben. Der Energieverbrauch beläuft sich auf 92 W, das bedeutet pro Liter Trinkwasser werden nur 3 Wh benötigt.

Tabelle 4:

| Elektroosmotischer Fluss | | | | | | | | | | |
|---|---|---|---|---|---|---|---|---|---|---|
| Hydrophile Membran | | | | | | | | | | |
| A | L | r | $\lambda$ | $\zeta$ | Umax | Mmax | Pmax | $I_{EOF}$ | $i_{tol}$ | Power |
| [m] | [m] | [m] | [m] | [V] | [V] | [kg/s] | [Pa] | [A] | [A] | [W] |
| 1 | 10^-4 | 6*10^-9 | 6*10^-9 | -0.1 | 7 | 2.3*10^-1 | 125*10^5 | 365 | 13 | 92 |

## Patentansprüche

1. Wasseraufbereitungsverfahren, insbesondere für die Gewinnung von Frischwasser aus Salzwasser, mittels Membrandestillation, wobei

   das aufzubereitende Wasser in einer Zuführungskammer (2) gehalten wird, deren Wand mindestens teilweise von einer hydrophoben wasserdampfdurchlässigen Membran (3) gebildet wird,

   parallel zu der hydrophoben Membran (3) eine hydrophile Membran (5) verläuft, die eine im Vergleich zu der hydrophoben Membran (3) größere Dicke und geringere Wärmeleitung je Flächeneinheit hat, und

   durch Pumpwirkung ein Dampfdruckunterschied zwischen dem aufzubereitenden Wasser und dem Frischwasser erzeugt wird, so daß die Membrandestillation durch den aus der Pumpwirkung resultierenden Dampfdruckunterschied angetrieben wird, wobei das Wasser in den Poren (3a) der hydrophilen Membran (5) kondensiert.

2. Wasseraufbereitungsverfahren nach Anspruch 1, **dadurch gekennzeichnet, daß** die Destillation nahezu isotherm erfolgt, wobei die Temperatur des kondensierenden Frischwassers höher als die Temperatur des verdampfenden aufzubereitenden Wassers ist und vorzugsweise die Temperaturdifferenz weniger als 30°C, besonders bevorzugt weniger als 10°C, noch mehr bevorzugt weniger als 1°C, beträgt.

3. Wasseraufbereitungsverfahren nach einem der Ansprüche 1 oder 2, wobei der Dampfdruckunterschied zumindest teilweise **dadurch** erzeugt wird, daß das Frischwasser aus der hydrophilen Membran (5) mittels eines Mikropumpverfahrens unter Krafteinwirkung auf die in den Poren der hydrophilen Membran befindlichen Wassermoleküle abgepumpt wird.

4. Wasseraufbereitungsverfahren nach Anspruch 3, wobei das Mikropumpverfahren ein elektroosmotisches Pumpverfahren ist.

**5.** Wasseraufbereitungsverfahren nach einem der vorhergehenden Ansprüche, wobei der Dampfdruckunterschied zumindest teilweise **dadurch** erzeugt wird, daß das aufzubereitende Wasser mit Überdruck in die Zuführungskammer gepumpt wird.

**6.** Vorrichtung zur Aufbereitung von Wasser, insbesondere für die Gewinnung von Frischwasser aus aufzubereitendem Wasser, mittels Membrandestillation, umfassend
eine Zuführungskammer (2), deren Wand mindestens teilweise von einer hydrophoben wasserdampfdurchlässigen Membran (3) gebildet wird,
einer parallel zu der hydrophoben Membran (3) verlaufenden hydrophilen Membran (5), die eine im Vergleich zu der hydrophoben Membran (3) größere Dicke und geringere Wärmeleitung je Flächeneinheit hat, so daß das Wasser in den Poren (5a) der hydrophilen Membran in der Nähe der Grenzfläche zu der hydrophoben Membran (3) kondensiert, und
einer Pumpeinrichtung, durch die ein Dampfdruckunterschied zwischen dem aufzubereitenden Wasser und dem Frischwasser erzeugt wird, so daß die Membrandestillation durch den aus der Pumpwirkung resultierenden Dampfdruckunterschied angetrieben wird, wobei das Wasser in den Poren der hydrophilen Membran kondensiert.

**7.** Vorrichtung nach Anspruch 6, bei welcher zur Durchführung eines elektroosmotischen Pumpverfahrens zwei Flächenelektroden (4,6) parallel zu der hydrophilen Membran (5) derartig angeordnet sind, daß mindestens eine Schicht der hydrophilen Membran (5) zwischen den beiden Elektroden verläuft, wobei die Elektroden (4,6) Bestandteile der hydrophilen Membran sein können und die zwischen ihnen verlaufende Schicht eine elektrische Oberflächenladung aufweist.

**8.** Vorrichtung nach einem der Ansprüche 6 oder 7, bei welcher die Zuführungskammer (2) überdruckfest ist und eine Pumpe vorgesehen ist, durch die das Wasser mit Überdruck in die Zuführungskammer gepumpt wird.

**9.** Verfahren nach einem der Ansprüche 1 bis 5 oder Vorrichtung nach einem der Ansprüche 6 bis 8, wobei die Dampfdurchlässigkeit der hydrophoben Membran (3) mindestens 100 $1/(h*m^2)$ bei einer Druckdifferenz von 60 bar beträgt.

**10.** Verfahren nach einem der Ansprüche 1 bis 5 oder Vorrichtung nach einem der Ansprüche 6 bis 8, wobei die Dicke der hydrophoben Membran (3) höchstens 100 $\mu$m, bevorzugt höchstens 10 $\mu$m, besonders bevorzugt höchstens 1 $\mu$m beträgt.

**11.** Verfahren nach einem der Ansprüche 1 bis 5 oder Vorrichtung nach einem der Ansprüche 6 bis 8, wobei die Dicke der hydrophilen Membran (5) mindestens 0,01 mm, bevorzugt mindestens 0,1 mm, besonders bevorzugt mindestens 1 mm beträgt.

**12.** Verfahren nach einem der Ansprüche 1 bis 5 oder Vorrichtung nach einem der Ansprüche 6 bis 8, wobei die hydrophile Membran (5) mindestens 10 mal so dick, bevorzugt mindestens 100 mal so dick wie die hydrophobe Membran ist.

**13.** Verfahren nach einem der Ansprüche 1 bis 5 oder Vorrichtung nach einem der Ansprüche 6 bis 8, wobei die Wärmeleitung je Flächeneinheit durch die hydrophobe Membran (3) mindestens 3 mal so hoch wie die Wärmeleitung je Flächeneinheit durch die hydrophile Membran ist.

**14.** Verfahren nach einem der Ansprüche 1 bis 5 oder Vorrichtung nach einem der Ansprüche 6 bis 8, wobei die hydrophobe Membran (3) porös ist und ihre Porengröße höchstens 100 $\mu$m, vorzugsweise höchstens 5 $\mu$m beträgt.

**15.** Verfahren nach einem der Ansprüche 1 bis 5 oder Vorrichtung nach einem der Ansprüche 6 bis 8, wobei die hydrophile Membran (5) mehrschichtig ausgebildet ist und die einzelnen Schichten unterschiedliche Eigenschaften haben.

**Claims**

**1.** Water processing method, in particular for producing fresh water from salt water, by means of membrane distillation, wherein
the water to be processed is held in a supply chamber (2), the wall of which is formed at least in part by a hydrophobic membrane (3) being permeable for water vapor,
a hydrophilic membrane (5) runs parallel to the hydrophobic membrane (3), the hydrophilic membrane (5) having a greater thickness in comparison with the hydrophobic membrane (3) and having a lower thermal conduction per unit area, and
a vapor pressure difference between the water to be processed and the fresh water is created by a pumping action so that the membrane distillation is driven by the vapor pressure difference resulting from the pumping action, the water condensing in the pores (3a) of the hydrophilic membrane (5).

2. Water processing method according to Claim 1, **characterized in that** the distillation is essentially isothermal, the temperature of the condensing fresh water being higher than the temperature of the evaporating water to be processed and the temperature difference preferably being less than 30 °C, especially preferably less than 10 °C, even more preferably less than 1 °C.

3. Water processing method according to any one of Claims 1 or 2, wherein the vapor pressure difference is at least partially created by the fact that the fresh water is pumped out of the hydrophilic membrane (5) by a micropump method including a force acting on the water molecules in the pores of the hydrophilic membrane.

4. Water processing method according to Claim 3, wherein the micropump method is an electro-osmotic pump method.

5. Water processing method according to any one of the preceding claims, wherein the vapor pressure difference is at least partially created by the fact that the water to be processed is pumped with pressure into the supply chamber.

6. Device for processing water, in particular for producing fresh water from water to be processed, by means of membrane distillation, comprising
a supply chamber (2), the wall of which is formed at least in part by a hydrophobic membrane (3) being permeable for water vapor,
a hydrophilic membrane (5) running parallel to the hydrophobic membrane (3), the hydrophilic membrane (5) having a greater thickness in comparison with the hydrophobic membrane (3) and having a lower thermal conduction per unit area so that the water.condenses in the pores (5a) of the hydrophilic membrane in proximity to the interface with the hydrophobic membrane (3), and
a pump device by means of which a vapor pressure difference is generated between the water to be processed and the fresh water so that the membrane distillation is driven by the vapor pressure difference resulting from the pumping action, the water condensing in the pores of the hydrophilic membrane.

7. Device according to Claim 6, wherein, in order to provide an electro-osmotic pump action, two flat electrodes (4, 6) are arranged in parallel with the hydrophilic membrane (5) such that at least a layer of the hydrophilic membrane (5) runs between the two electrodes, the electrodes (4, 6) optionally being parts of the hydrophilic membrane and the layer running between them having an electric surface charge.

8. Device according to any one of Claims 6 or 7, wherein the supply chamber (2) is pressure resistant and a pump is provided by which the water is pumped with pressure into the supply chamber.

9. Method according to any one of Claims 1 to 5 or device according to any one of Claims 6 to 8, wherein the vapor permeability of the hydrophobic membrane (3) is at least 100 L/(h·m$^2$) at a pressure difference of 60 bar.

10. Method according to any one of Claims 1 to 5 or device according to any one of Claims 6 to 8, wherein the thickness of the hydrophobic membrane (3) is at most 100 $\mu$m, preferably at most 10 $\mu$m, especially preferably at most 1 $\mu$m.

11. Method according to any one of Claims 1 to 5 or device according to any one of Claims 6 to 8, wherein the thickness of the hydrophilic membrane (5) is at least 0.01 mm, preferably at least 0.1 mm, especially preferably at least 1 mm.

12. Method according to any one of Claims 1 to 5 or device according to any one of Claims 6 to 8, wherein the thickness of the hydrophilic membrane (5) is at least 10 times, preferably at least 100 times the thickness of the hydrophobic membrane.

13. Method according to any one of Claims 1 to 5 or device according to any one of Claims 6 to 8, wherein the thermal conduction per unit area through the hydrophobic membrane (3) is at least three times the thermal conduction per unit area through the hydrophilic membrane.

**14.** Method according to any one of Claims 1 to 5 or device according to any one of Claims 6 to 8, wherein the hydrophobic membrane (3) is porous and its pore size is at most 100 μm, preferably at most 5 μm.

**15.** Method according to any one of Claims 1 to 5 or device according to any one of Claims 6 to 8, wherein the hydrophilic membrane (5) comprises a plurality of layers and the individual layers have different properties.

**Revendications**

**1.** Procédé de traitement de l'eau, notamment de production d'eau douce à partir d'eau salée, par distillation membranaire,
l'eau à traiter étant retenue dans une chambre d'alimentation (2) dont la paroi est formée, au moins en partie, par une membrane hydrophobe perméable à la vapeur d'eau (3),
une membrane hydrophile (5) s'étendant parallèlement à la membrane hydrophobe (3), laquelle membrane hydrophile est plus épaisse que la membrane hydrophobe (3) et a une conduction thermique plus faible par unité de surface et
une différence de pression de vapeur entre l'eau à traiter et l'eau douce étant générée par une action de pompage, de manière à ce que la distillation membranaire soit provoquée par la différence de pression de vapeur résultant de l'action de pompage, l'eau présente dans les pores (3a) de la membrane hydrophile (5) se condensant.

**2.** Procédé de traitement de l'eau selon la revendication 1, **caractérisé en ce que** la distillation se déroule de manière pratiquement isotherme, la température de l'eau douce qui se condense étant plus élevée que la température de l'eau à traiter qui se vaporise et la différence de température étant de préférence inférieure à 30°C, plus préférablement inférieure à 10°C et, encore plus préférablement, inférieure à 1°C.

**3.** Procédé de traitement de l'eau selon l'une des revendications 1 ou 2, la différence de pression de vapeur étant générée, au moins en partie, par le fait que l'eau douce est extraite de la membrane hydrophile (5) sous l'effet d'une force agissant sur les molécules d'eau qui se trouvent dans les pores de la membrane hydrophile, au moyen d'un procédé de micropompage.

**4.** Procédé de traitement de l'eau selon la revendication 3, le procédé de micropompage étant un procédé de pompage électro-osmotique.

**5.** Procédé de traitement de l'eau selon l'une des revendications précédentes, la différence de pression de vapeur étant générée, au moins en partie, par le fait que l'eau à traiter est pompée dans la chambre d'alimentation avec une surpression.

**6.** Dispositif de traitement de l'eau, notamment de production d'eau douce à partir d'une eau à traiter, par distillation membranaire, comprenant
une chambre d'alimentation (2) dont la paroi est formée, au moins en partie, par une membrane hydrophobe perméable à la vapeur d'eau (3), une membrane hydrophile (5) s'étendant parallèlement à la membrane hydrophobe (3), laquelle membrane hydrophile est plus épaisse que la membrane hydrophobe (3) et a une conduction thermique plus faible par unité de surface, de manière à ce que l'eau présente dans les pores (5a) de la membrane hydrophile se condense à proximité de l'interface avec la membrane hydrophobe (3) et
un dispositif de pompage grâce auquel une différence de pression de vapeur entre l'eau à traiter et l'eau douce est générée, de manière à ce que la distillation membranaire soit provoquée par la différence de pression de vapeur résultant de l'action de pompage, l'eau présente dans les pores de la membrane hydrophile se condensant.

**7.** Dispositif selon la revendication 6, dans lequel, pour exécuter un procédé de pompage électro-osmotique, deux électrodes planes (4, 6) sont disposées parallèlement à la membrane hydrophile (5) de manière à ce qu'au moins une couche de la membrane hydrophile (5) s'étende entre les deux électrodes, les électrodes (4, 6) pouvant être des parties constituantes de la membrane hydrophile et la couche qui s'étend entre elles présentant une charge électrique superficielle.

**8.** Dispositif selon l'une des revendications 6 ou 7, dans lequel la chambre d'alimentation (2) est résistante aux surpressions et une pompe grâce à laquelle l'eau est pompée dans la chambre d'alimentation avec une surpression est prévue.

9. Procédé selon l'une des revendications 1 à 5 ou dispositif selon l'une des revendications 6 à 8, la perméabilité à la vapeur de la membrane hydrophobe (3) étant égale à au moins 100 l/(h*m$^2$) pour une différence de pression de 60 bar.

10. Procédé selon l'une des revendications 1 à 5 ou dispositif selon l'une des revendications 6 à 8, l'épaisseur de la membrane hydrophobe (3) étant au maximum 100 $\mu$m, de préférence au maximum 10 $\mu$m, plus préférablement au maximum 1 $\mu$m.

11. Procédé selon l'une des revendications 1 à 5 ou dispositif selon l'une des revendications 6 à 8, l'épaisseur de la membrane hydrophile (3) étant au minimum 0,01 mm, de préférence au minimum 0,1 mm, plus préférablement au minimum 1 mm.

12. Procédé selon l'une des revendications 1 à 5 ou dispositif selon l'une des revendications 6 à 8, la membrane hydrophile (5) étant au moins 10 fois plus épaisse, de préférence au moins 100 fois plus épaisse, que la membrane hydrophobe.

13. Procédé selon l'une des revendications 1 à 5 ou dispositif selon l'une des revendications 6 à 8, la conduction thermique par unité de surface à travers la membrane hydrophobe (3) étant au moins 3 fois plus élevée que la conduction thermique par unité de surface à travers la membrane hydrophile.

14. Procédé selon l'une des revendications 1 à 5 ou dispositif selon l'une des revendications 6 à 8, la membrane hydrophobe (3) étant poreuse et la dimension de ses pores étant de 100 $\mu$m au maximum, de préférence de 5 $\mu$m au maximum.

15. Procédé selon l'une des revendications 1 à 5 ou dispositif selon l'une des revendications 6 à 8, la membrane hydrophile (5) étant formée de plusieurs couches et les couches individuelles possédant des propriétés différentes.

**Fig.1**

**Fig.2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3340186 A, P.K. Weyl
- US 4545862 A, Gore
- US 4265713 A
- US 4476024 A
- US 4419187 A
- US 4473473 A, alle Cheng
- US 4419242 A

**In der Beschreibung aufgeführte Nicht-Patentliteratur**

- **Bouchekima et al.** The performance of the capillary film solar still installed in South Algeria. *Desalination,* 2001, vol. 137, 31-38
- **YING KONG et al.** Plasma Polymerization of Octafluorocyclobutane and Hydrophobic Microporous Composite Membranes for Membrane Distillation. *JOURNAL OF APPLIED POLYMER SCIENCE,* 191-199
- **C.L. Rice ; R. Whitehead.** Electrokinetic Flow in a Narrow Cylindrical Capillary. *J. Phys. Chem.,* 1965, vol. 69, 4017-4024
- **S. Zeng ; C.-H. Chen ; J. C. Mikkelsen Jr. ; J.G. Santiago.** Fabrication and charaterization of electroosmotic micropumps. *Sensors and Actuators B,* 2001, vol. 79, 107-114